# EUROPEAN PATENT SPECIFICATION

(11) **EP 4 148 843 B1**
(45) Date of publication and mention of the grant of the patent: **30.10.2024**
(21) Application number: 21195935.8
(22) Date of filing: 10.09.2021
(51) Int. Cl.: H01M 10/04, H01M 50/249, H01M 50/291, H01M 50/293, H01M 50/342, H01M 50/507, H01M 50/521, H01M 50/55

(54) **BATTERY SYSTEM AND VEHICLE INCLUDING THE BATTERY SYSTEM**
BATTERIESYSTEM UND FAHRZEUG MIT DEM BATTERIESYSTEM
SYSTÈME DE BATTERIE ET VÉHICULE COMPRENANT LE SYSTÈME DE BATTERIE

(43) Date of publication of application: 15.03.2023
(73) Proprietor: Samsung SDI Co., Ltd., Yongin-si, Gyeonggi-do 17084 (KR)
(72) Inventor: Reinprecht, Wolfgang, 8144 Attendorf (AT)
(74) Representative: Gulde & Partner

(56) References cited:
- WO-A1-2017/004078
- US-A1- 2018 175 357
- US-A1- 2021 050 572

## Description

### Field of the Disclosure

The present invention relates to a battery system comprising a protection for an electrical and thermal isolation of electrically conducting elements from a venting gas in case of a thermal runaway. Further, the present invention relates to a vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the cell terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle.

To provide thermal control of the enclosed battery cells within the battery housing a thermal management system may be used to efficiently emit, discharge and/or dissipate heat generated within the battery housing. In certain conditions of the battery cells an increase of the internal temperature can lead to abnormal reactions occurring in the battery cells. An example of such abnormal operation conditions is a thermal runaway in a battery cell that may be entered by a strongly overheated or overcharged cell. The thermal runaway is a self-accelerating chemical reaction inside the battery cell, which produces high amounts of heat and venting gas, until all available material is exhausted.

A state of the art venting concept of a battery is to let the hot venting gas of a battery cell in thermal runaway condition expand into the battery housing and escape through a housing venting valve to the outside (the environment of the battery housing). The exhausted material (venting products) may comprise hot and toxic venting gas as well as conductive solid matter (material) like graphite powder and metal fragments. Said electrically conductive material may deposit on electrically active parts of a high electric potential, also called live parts, on top of the cells causing short circuits and arcing. Thus, the thermal runaway of one battery cell could cause short circuits and thus a consecutive thermal runaway of other battery cells leading into a complete damage of the battery (the battery pack), the battery system and the vehicle.

The pollution caused by graphite and metallic parts can affect most of the battery cells or battery modules of a battery and lead to short circuits, because all battery cells or modules are arranged within the same battery housing. Depending on the location of the battery cell in thermal runaway with respect to the housing venting valve, different air streams might develop and cause different portions of the battery to be affected. State of the art of mounting the battery cells in a battery pack is to use a metallic, in particular aluminum or steal, fixation means which itself during a thermal runaway event can short circuit a part of or even the complete battery which can lead to a dramatic burn down of the battery system.

To overcome this issue, it is known to use a partial cover or coating of the metallic fixation means which, however, comprises openings where electrical arcing may occur. Also, the applied material cannot withstand high temperatures occurring during a thermal runaway. As of today, the required high temperature isolations between said live parts and the chassis are rarely used due to high costs. Instead, isolations of bus bars and electrical connections are made of low-cost low temperature resistant plastic. Therefore, during a thermal runaway event and the displacement of cells and electrical connections an internal short circuit and thus damaging of cells, modules or parts of the battery including the crossbeams arranged between adjacent cell modules can occur.

US 2014/0234677 A1 describes a battery module which includes a plurality of battery cells aligned in one direction, neighbouring cells being interconnected with one another via electrical connecting means contacting cell terminals of the battery cells, and a vent portion through which venting gas may be exhausted. A cover plate covers the vent portions, wherein a heat-resistance member is arranged between the battery cells and the cover plate, the cover plate and the heat-resistance member having vent openings each formed in a region corresponding to one of the vent portions of the battery cells. On top of the cover plate a cover channel is arranged covering the vent openings so that no venting gas can expand into the battery housing. Via the cover channel the venting gas exiting the battery cells is directed toward an exhaust port. Such an arrangement is constructively complex.

DE 10 2013 021 240 A1 describes a cell connector board made of an epoxy resin that connects the cells of a battery via cell connectors and encloses the cell connectors as well as an interconnecting busbar to electrically isolate these from the surrounding. Cell holders are provided which are connected via rods to support the battery cells and fixate them inside a cell housing. While the cell connector board provides electrical insulation the epoxy resin is not able to withstand the high temperatures occurring during a thermal runaway event.

WO 2017/004078 A1 discloses a battery system with battery cells and a current carrier arranged on top of the battery cells.

US 2018/175357 A1 concerns a battery connection module with a circuit board, a plurality of busbars at the bottom surface of the circuit board and a cover covering electrode connecting portions of the busbars.

US 2021/050572 A1 describes a battery assembly including a bus bar plate.

It is thus an object of the present invention to overcome or reduce at least some of the drawbacks of the prior art and to provide an improved thermal runaway handling, in particular to provide a battery system better protected against the venting products exhausted during a thermal runaway.

### Summary of Invention

Embodiments of the present disclosure seek to solve at least one of the problems existing in the prior art to at least some extent. The invention is defined by the features of claim 1.

In particular, a battery system for a vehicle is provided comprising a plurality of battery cells and a battery housing enclosing the plurality of battery cells. The battery cells are at a surface of the battery cells interconnected with one another via electrical connecting means contacting cell terminals of the battery cells. The electrical connecting means may connect a cell terminal of one battery cell to the cell terminal of another battery cell, in particular of a neighboring battery cell. The battery cells may be connected in series and/or in parallel. A battery module may be formed by such an interconnection as explained above. Thus, multiple battery cells may be interconnected with one another via their cell terminals and electrical connecting means so as to form a battery module. Also, the battery system may comprise multiple battery modules each comprising multiple battery cells, wherein neighboring modules are interconnected with one another via said electrical connecting means contacting cell terminals of the battery cells. In other words, the battery cells may be arranged in one or more rows so as to form modules electrically interconnected with one another by the electrical connecting means, either within rows and therefore within the modules, or across rows so as to connect the modules. The interconnected cells and/or modules may be spatially separated from each other via structural members, in particular crossbeams. The electrical connecting means interconnecting the cells and/or the modules may e.g. comprise or consist of busbars. The battery modules may form a battery pack as explained above.

According to the invention the battery system comprises an isolation and fixation element of an electrically and thermally isolating material for isolating the electrical connecting means from the surroundings, the isolation and fixation element enclosing the electrical connecting means and at least one cell carrier element for supporting the battery cells at a structural member of the battery system. Said structural member may e.g. be a battery housing, in particular a side wall of the battery housing.

The isolation and fixation element according to the invention is made of a temperature resistant and electrically isolating material, in particular a temperature resistant compound comprising a woven fabric and a matrix support material, e.g. glass fiber or equivalent and a resin. The at least one cell carrier element can support the battery cells at the battery housing as a structural member of the battery system. The at least one cell carrier element can extend above the surface of the battery cells. The cell carrier element can be a metallic, in particular aluminum or steal, fixation means as mentioned above.

According to the invention, the isolation and fixation element does not simply cover the electrical connecting means but encloses them. In addition, the isolation and fixation element also encloses the cell carrier element. Preferably, the isolation and fixation element encloses all of the electrical connecting means and cell carrier elements at the surface or venting side of the battery cells. The isolation and fixation element covers the battery cells at the surface or venting side, preferably covering the complete surface or venting side. The isolation and fixation element may also cover the crossbeams between the cells and/or modules. The isolation and fixation element enclosing the electrical connecting means and the cell carrier element means that the isolation and fixation element accommodates these. In particular, the isolation and fixation element can extend along two opposite sides of the electrical connecting means and the cell carrier element, i.e. a side facing the surface or venting side of the battery cells and a opposite side. Preferably, the isolation and fixation element encloses the electrical connecting means and the cell carrier element from four or even all six sides while, of course, still allowing for contact with the cell terminals of the battery cells. The isolation and fixation element can be in direct contact with the electrical connecting means, preferably being adapted to the contour of the electrical connecting means. The cell carrier element and electrical connecting means can also be laminated into the isolation and fixation element.

Furthermore, the isolation and fixation element serves as a mechanical fixation of the cell stack to the carrier element. The isolation and fixation element is thus a load-bearing element. As mentioned, the isolation and fixation element may consist of a temperature resistant compound comprising a woven fabric and a matrix support material. Such a compound is capable of such mechanical fixation of the cell stack to the carrier element, at least in a cured state. The isolation and fixation element can be attached to the carrier element with fastening means such as screws, bolts or equivalent. Also, the isolation and fixation element can be attached to the crossbeam(s) with such fastening means. The isolation and fixation element may thus act as as a mechanical holder of the battery cells in a vertical z-direction.

Thus, the isolation and fixation element according to the invention fulfills a double function: on the one hand it provides electrical and thermal insulation for the electrical connecting means and the carrier element and on the other hand it provides a mechanical fixation of the cell stack. As the isolation and fixation element does not only cover but enclose the electrical connecting means it provides for a more reliable insulation. As the isolation and fixation element also encloses the carrier element, in particular the metallic fixation means, the carrier element itself can no longer short circuit a part of or even the complete battery during a thermal runaway event. Thus, a dramatic burn down of the battery system can be prevented. Furthermore, the isolation and fixation element encloses the carrier element such that it fixes or holds the cells. This allows for a particularly secure fixation.

According to an embodiment the isolation and fixation element encloses the electrical connecting means from at least two opposite sides by extending along a first side of the electrical connecting means facing the surface of the battery cells and along a second side of the electrical connecting means opposite the first side. Accordingly, the isolation and fixation element may enclose the carrier element from at least two opposite sides by extending along a first side of the carrier element facing the surface of the battery cells and along a second side of the carrier element opposite the first side. In other words, the isolation and fixation element extends in part between the electrical connecting means/the carrier element and the surface or venting side of the battery cells and in part along the opposite side of the electrical connecting means/the carrier element, i.e. the side facing away from the surface or venting side of the battery cells. As mentioned above, the isolation and fixation element and/or the carrier element can in this manner enclose the electrical connecting means from two opposite sides. This allows for a secure fixation and isolation.

In particular, the isolation and fixation element may comprise multiple layers which may be separate layer plates or one integral component. According to an embodiment the isolation and fixation element comprises a bottom layer and top layer, wherein the electrical connecting means and the at least one cell carrier element are enclosed by the bottom layer and top layer. According to a respective embodiment an intermediate isolating layer accommodating the electrical connecting means and the at least one cell carrier element is arranged as a middle layer between the top layer and the bottom layer. Thus, the electrical connecting means and the cell carrier element may be considered part of the middle layer wherein above and below the middle layer the top layer and the bottom layer may follow, in particular in direct contact with the electrical connecting means and the cell carrier element. This allows for a secure fixation and isolation.

According to the invention the cell carrier element is a cell holder strip, in particular a metal strip. As mentioned above, the cell carrier element serves as a means to fixate the cells to the battery housing. The cell holder strip may therefore fixate the cells to the battery housing, for example by being attached to the battery housing and extending from the battery housing above the surface or venting side of the battery cells. The cell holder strip may extend along a complete width of the surface or venting side, in particular from one side of battery housing to an opposite side of the battery housing, and may be connected to both sides of the battery housing. Multiple strips of such kind may be provided to allow for a secure fixation. The isolation and fixation element may enclose multiple of these cell holder strips, in particular all of them extending along the surface or venting side. This allows for a particularly secure fixation of the cells and to a particularly reliable isolation of the cells from the cell carrier elements.

According to an embodiment the isolation and fixation element fully covers the surface of the battery cells, the surface being the surface or venting side of the battery cells. In other words, the isolation and fixation element may extend over the complete surface or venting side of the battery cells so as to cover all of the cells. In this regard the isolation and fixation element preferably encloses all of the electrical connecting means and cell carrier elements at the surface or venting side. The isolation and fixation element may thus not only protect the electrical connecting means, but rather the complete surface or venting side of the plurality of battery cells, meaning the side at which the venting products leave the cells in case of a thermal runaway. The isolation and fixation element fully covering the surface or venting side of the cells may therefore reliably prevent pollution of the cells. Also, any further live parts arranged at the surface or venting side, as e.g. the cell terminals of the cells, may this way be shielded from the venting products. The venting products may deposit onto the whole surface of the plurality of battery cells without any elements underneath taking damage. A thermal separation of the remaining cells may thus be achieved so that a thermal propagation of the runaway incident may be prevented and the risk of a burn down of the entire battery system be reduced. Thus, the cells and the live parts can be protected effectively and completely from the venting gas and the particles it carries.

According to an embodiment the isolation and fixation element comprises venting means aligned with venting exits of the battery cells and adapted such that the venting products exiting the battery cells can pass through the venting means into a venting channel of the battery housing. According to a respective embodiment battery system the venting means comprise any one of the following: through-holes extending through the isolation and fixation element, venting valves, burst membranes bursting under the pressure of the venting products. The venting means of the isolation and fixation element may be aligned to and formed correspondingly to the venting exits of the battery cells. Through these venting means the venting products can leave the battery cells at the surface or venting side bypassing the isolation and fixation element even when it fully covers the venting side of the cells. The venting products can deposit on the isolation and fixation element without negatively affecting the enclosed electrical connecting means and/or carrier element.

According to an embodiment the isolation and fixation element can resist temperatures of at least 800°C, preferably at least 1000°C, and/or up to 1200°C. In particular, the isolation and fixation element may be adapted to withstand temperatures between 1000°C and 1200°C, preferably between 1100°C and 1200°C. The isolation and fixation element thus shields the live parts of the cells reliably even at temperatures of the venting products of a 1000°C or more. If the isolation and fixation element were not able to resist temperatures of at least 1000°C, the isolation and fixation element may under certain circumstances be damaged due to the hot venting products which temperatures may be at 1000°C or even higher. The isolation and fixation element withstanding temperatures of up to 1200°C, however, is sufficient as the temperature of the venting products does in general not exceed this temperature.

According to an embodiment the isolation and fixation element comprises a composite material with a woven fabric and a matrix support material, in particular a resin. The woven fabric may be in the form a mat and may comprise fibers, in particular glass and/or basalt fibers. The woven fabric may thus comprise e.g. a glass fiber mat. The matrix support material, which may preferably be a resin, provides stability to the isolation and fixation element allowing for its load-bearing capabilities mentioned above.

According to another aspect of the present disclosure, a vehicle including a battery system as defined above is provided. The battery system is preferably integrated into an underbody construction of the vehicle which allows the battery system to have a substantially flat shape. The vehicle is advantageous as in case of a thermal runaway live parts are shielded from exhausted venting products, which may comprise electrically conductive dust. Thereby an occurrence of short circuits is largely reduced or prevented.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 is a side view illustrating in extracts a battery system according to an embodiment,
Fig. 2 is a cross-sectional view showing the battery system of Fig. 1 in a cross section along the line A-A shown in Fig. 1.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. For better readability, not all elements in the figures are marked with reference signs. Especially in the case of redundant elements, only some of the elements may have reference symbols. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Herein, the terms "top" and "bottom" are defined according to the z-axis. For example, the top cover is positioned at the upper part of the z-axis, whereas the bottom cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

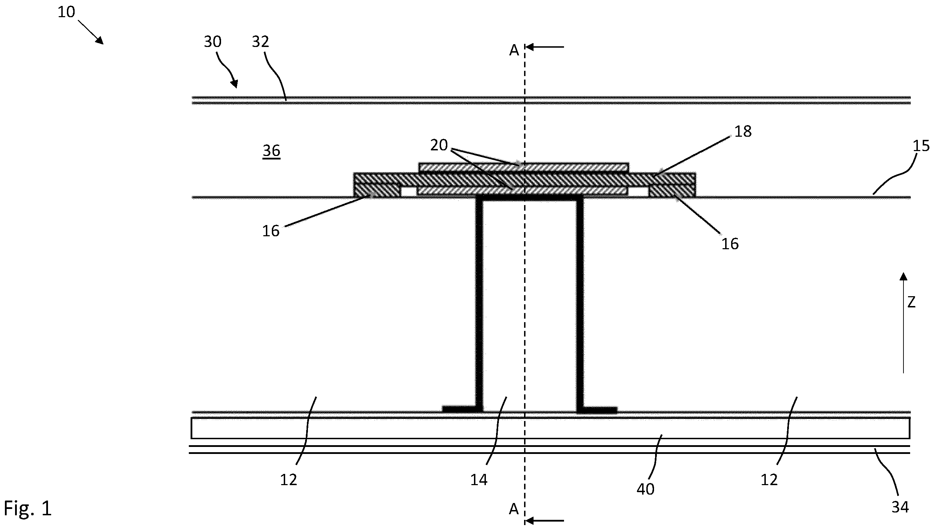

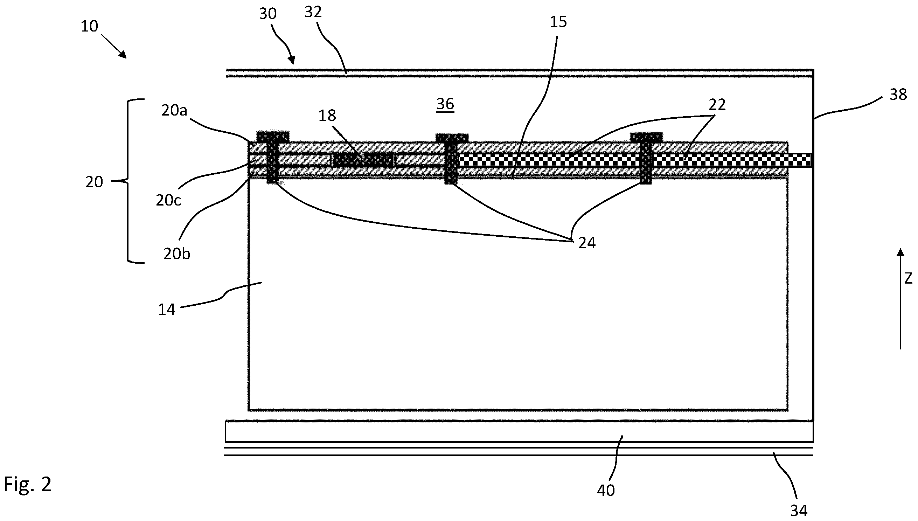

In Figures 1 and 2 a battery system 10 for an electric vehicle is shown. The battery system 10 comprises a plurality of battery cells 12 arranged in a row and forming a battery module. Neighboring battery cells 12 are separated from one another by crossbeams 14. The battery system 10 further comprises a battery housing 30, including a top cover 32 and a bottom cover 34, enclosing the plurality of battery cells 12. The battery cells 12 are arranged on a cooling plate 40 which may be arranged atop the bottom cover 34 or which may form the bottom cover 34. The battery housing may comprise not shown side covers at the left and at the right. The battery cells 12 are arranged inside battery housing 30 such that a hollow space 36 is provided between the battery cells 12 and the top cover 32 where venting gas can escape to.

The battery cells 12 comprise cell terminals 16, wherein neighboring battery cells 12 are interconnected with one another via busbars (as electrical connecting means) 18 forming electrical connections between the cell terminals 16 of two neighboring battery cells 12. Also, the modules formed by the battery cells may be interconnected with one another in series via busbars extending between neighboring modules (not shown). The cell terminals 16 and the busbars 18 are arranged at a surface (or venting side) 15 of the battery cells 12, which in this case is the upper side of the battery cells 12 facing the top cover 32. Each of the battery cells 12 comprises a venting exit (not shown) at that side for allowing venting products produced in an abnormal operation condition, also known as a thermal runaway event, to be released from the battery cells 12 into the hollow space 36 if a certain overpressure and/or a certain temperature inside affected battery cells 12 is exceeded.

The battery system 10 further comprises a cell holder strip 22 as a cell carrier element. The cell holder strip 22, which is preferably metallic, extends from a side wall 38 of the battery housing 30 above the venting side 15 of the one or more of the battery cells, in particular directly above the crossbeam 14 as can be seen in Fig. 2. The cell holder strip 22 serves as a fixation for the battery cells 12 to the battery housing 30. The cell holder strip 22, in turn, may be fixedly secured to the side wall 38.

The battery system 10 further comprises an isolation and fixation element 20 enclosing the busbar 18 and the cell holder strip 22. As can be seen in Fig. 2, the isolation and fixation element 20 comprises a top layer 20a, a bottom layer 20b and a middle layer 20c, the middle layer 20c as an intermediate isolating layer accommodating the busbars 18 and the at least one cell carrier element 22. Both the busbar 18 and the cell holder strip 22 are enclosed by this layer structure. The isolation and fixation element 20 preferably consists of a glass mat with a resin similar to FR4 or equivalent and provides an electrical and thermal isolation of the busbar 18 as well as a mechanical fixation of the cell stack to the cell holder strip 22 and therefore the battery housing the cell holder strip 22 is connected to. The top layer 20a and bottom layer 20b can be individual parts to allow for an easy assembly.

The isolation and fixation element 20 is attached to the cell holder strip 22 via screws or bolts 24 and acts as a mechanical holder of the battery cells in z-direction. The material of the isolation and fixation element 20 is electrically isolating up to temperatures of 1000°C and therefore prevents arcing or short circuit of parts of the battery system during a thermal runaway event. The isolation and fixation element 20 encloses the relevant electrical conducting parts, i.e. the busbar 18, which ensures enough distance to prevent arcing between adjacent cells even when graphite deposition occurs during a thermal runaway event.

Due to the isolation and fixation element the electrical connecting means and the carrier element are shielded from venting products exiting one or more of the battery cells at their venting side in case of a thermal runaway. Thus, the isolation and fixation element keeps any dust, graphite and metallic parts exiting the cells during a thermal runaway away from live parts to prevent arcing. The isolation and fixation element ensures isolation of the electrical connections against the mechanical structure of the battery system. Also, it provides thermal separation between adjacent cell stacks, in particular because it covers the crossbeams as well, and therefore slows down thermal propagation and reduces the risk of burn down of the complete pack. The electrical isolation of the fixation is provided up to elevated temperatures of 1000°C to provide safety during a thermal runaway event.

In addition, the isolation and fixation element provides a mechanical fixation of the battery cells to the carrier element and thereby to the battery housing. The isolation and fixation element is thus a load-bearing element. As mentioned, the isolation and fixation element consists of a temperature resistant compound comprising a woven fabric and a matrix support material. Such a compound is capable of such mechanical fixation of the cell stack to the carrier element. The isolation and fixation element thus acts as a mechanical holder of the battery cells in the vertical z-direction securing the cells against unwanted movement.

### Reference signs

- 10: battery system
- 12: battery cells
- 14: crossbeam
- 15: venting side
- 16: cell terminals
- 18: busbar/connecting means
- 20: isolation and fixation element
- 20a: top layer
- 20b: bottom layer
- 20c: middle layer
- 22: cell holder strip
- 24: bolts or screws
- 30: battery housing
- 32: top cover
- 34: bottom cover
- 36: hollow space
- 38: side wall
- 40: cooling plat

## Claims

1. A battery system (10) for an electric vehicle, comprising a plurality of battery cells (12) and a battery housing (30) enclosing the battery cells (12), wherein the battery cells (12) are at a surface (15) thereof interconnected with one another via electrical connecting means (18) contacting cell terminals (16) of the battery cells (12), further comprising an isolation and fixation element (20) of an electrically and thermally insulating material for isolating the electrical connecting means (18) from the surroundings, the isolation and fixation element (20) enclosing the electrical connecting means (18) and at least one cell carrier element (22) for supporting the battery cells (12) at the battery housing (30) as a structural member of the battery system (10), wherein the cell carrier element (22) is a metallic cell holder strip serving as a fixation for the battery cells (12) to the battery housing (30).

2. The battery system (10) of claim 1, wherein the isolation and fixation element (20) encloses the electrical connecting means (18) from at least two opposite sides by extending along a first side of the electrical connecting means (18) facing the surface (15) of the battery cells (12) and along a second side of the electrical connecting means (18) opposite the first side.

3. The battery system (10) of claim 1 or 2, wherein the isolation and fixation element (20) encloses the carrier element (22) from at least two opposite sides by extending along a first side of the carrier element (22) facing the surface (15) of the battery cells (12) and along a second side of the carrier element (22) opposite the first side.

4. The battery system (10) of any one of the preceding claims, wherein the isolation and fixation element (20) comprises a bottom layer (20b) and top layer (20a), wherein the electrical connecting means (18) and the at least one cell carrier element (22) are enclosed by the bottom layer and top layer.

5. The battery system (10) of claim 4, wherein an intermediate isolating layer accommodating the electrical connecting means (18) and the at least one cell carrier element (22) is arranged as a middle layer (20c) between the top layer and the bottom layer.

6. The battery system (10) of any one of the preceding claims, wherein the isolation and fixation element (20) fully covers the surface of the battery cells (12).

7. The battery system (10) of any one of the preceding claims, wherein the isolation and fixation element (20) comprises venting means aligned with venting exits of the battery cells (12) and adapted such that venting products exiting the battery cells (12) can pass through the venting means into a venting channel of the battery housing.

8. The battery system (10) of claim 7, wherein the venting means comprise any one of the following: through-holes extending through the isolation and fixation element (20), venting valves, burst membranes bursting under the pressure of the venting products.

9. The battery system (10) of any one of the preceding claims, wherein the isolation and fixation element (20) comprises a composite material with a woven fabric and a matrix support material.

10. The battery system (10) of claim 9, wherein the woven fabric comprises glass and/or basalt fibers.

11. An electric vehicle comprising a battery system (10) of any one of the preceding claims.

## Patentansprüche

1. Batteriesystem (10) für ein Elektrofahrzeug, umfassend eine Mehrzahl von Batteriezellen (12) und ein Batteriegehäuse (30), das die Batteriezellen (12) umschließt, wobei sich die Batteriezellen (12) an deren Oberfläche (15) befinden und über elektrische Verbindungsmittel (18), die Zellanschlüsse (16) der Batteriezellen (12) berühren, miteinander verbunden sind, ferner umfassend ein Isolier- und Fixierelement (20) aus einem elektrisch und thermisch isolierenden Material zum Isolieren der elektrischen Verbindungsmittel (18) von der Umgebung, wobei das Isolier- und Fixierelement (20) die elektrischen Verbindungsmittel (18) und wenigstens ein Zellträgerelement (22) zum Tragen der Batteriezellen (12) an dem Batteriegehäuse (30) als strukturelles Teil des Batteriesystems (10) umschließt, wobei das Zellträgerelement (22) ein metallischer Zellhaltestreifen ist, der als Fixierung für die Batteriezellen (12) an dem Batteriegehäuse (30) dient.

2. Batteriesystem (10) nach Anspruch 1, wobei das Isolier- und Fixierelement (20) die elektrischen Verbindungsmittel (18) von wenigstens zwei gegenüberliegenden Seiten durch Erstrecken entlang einer ersten Seite der elektrischen Verbindungsmittel (18), die der Oberfläche (15) der Batteriezellen (12) zugewandt ist, und entlang einer zweiten Seite der elektrischen Verbindungsmittel (18), die der ersten Seite gegenüberliegt, umschließt.

3. Batteriesystem (10) nach Anspruch 1 oder 2, wobei das Isolier- und Fixierelement (20) das Trägerelement (22) von wenigstens zwei gegenüberliegenden Seiten durch Erstrecken entlang einer ersten Seite des Trägerelements (22), die der Oberfläche (15) der Batteriezellen (12) zugewandt ist, und entlang einer zweiten Seite des Trägerelements (22), die der ersten Seite gegenüberliegt, umschließt.

4. Batteriesystem (10) nach einem der vorangehenden Ansprüche, wobei das Isolier- und Fixierelement (20) eine untere Schicht (20b) und eine obere Schicht (20a) umfasst, wobei die elektrischen Verbindungsmittel (18) und das wenigstens eine Zellträgerelement (22) durch die untere Schicht und die obere Schicht umschlossen sind.

5. Batteriesystem (10) nach Anspruch 4, wobei eine dazwischenliegende Isolierschicht, welche die elektrischen Verbindungsmittel (18) und das wenigstens eine Zellträgerelement (22) unterbringt, als mittlere Schicht (20c) zwischen der oberen Schicht und der unteren Schicht angeordnet ist.

6. Batteriesystem (10) nach einem der vorangehenden Ansprüche, wobei das Isolier- und Fixierelement (20) die Oberfläche der Batteriezellen (12) vollständig abdeckt.

7. Batteriesystem (10) nach einem der vorangehenden Ansprüche, wobei das Isolier- und Fixierelement (20) Entlüftungsmittel umfasst, die mit Entlüftungsauslässen der Batteriezellen (12) ausgerichtet sind und derart ausgelegt sind, dass aus den Batteriezellen (12) austretende Entlüftungserzeugnisse durch die Entlüftungsmittel in einen Entlüftungskanal des Batteriegehäuses entweichen können.

8. Batteriesystem (10) nach Anspruch 7, wobei die Entlüftungsmittel eines der folgenden umfasst: Durchgangslöcher, die sich durch das Isolier- und Fixierelement (20) erstrecken, Entlüftungsventile, Berstmembranen, die durch den Druck der Entlüftungselemente bersten.

9. Batteriesystem (10) nach einem der vorangehenden Ansprüche, wobei das Isolier- und Fixierelement (20) ein Verbundmaterial mit einem Webstoff und einem Matrix-Trägermaterial umfasst.

10. Batteriesystem (10) nach Anspruch 9, wobei der Webstoff Glas- und/oder Basaltfasern umfasst.

11. Elektrofahrzeug, umfassend ein Batteriesystem (10) nach einem der vorangehenden Ansprüche.

## Revendications

1. Système de batterie (10) pour un véhicule électrique, comprenant une pluralité de cellules de batterie (12) et un boîtier de batterie (30) renfermant les cellules de batterie (12), dans lequel les cellules de batterie (12) sont connectées entre elles, au niveau d'une surface (15) de celles-ci, via des moyens de connexion électrique (18) en contact avec des bornes de cellule (16) des cellules de batterie (12), comprenant en outre un élément d'isolation et de fixation (20) constitué d'un matériau électriquement et thermiquement isolant pour isoler les moyens de connexion électrique (18) vis-à-vis de l'environnement, l'élément d'isolation et de fixation (20) renfermant les moyens de connexion électrique (18) et au moins un élément de support de cellules (22) destiné à supporter les cellules de batterie (12) au niveau du boîtier de batterie (30) en tant qu'élément structurel du système de batterie (10), dans lequel l'élément de support de cellules (22) est une bande de support de cellules métallique servant de fixation pour les cellules de batterie (12) au boîtier de batterie (30).

2. Système de batterie (10) selon la revendication 1, dans lequel l'élément d'isolation et de fixation (20) renferme les moyens de connexion électrique (18) depuis au moins deux côtés opposés en s'étendant le long d'un premier côté des moyens de connexion électrique (18) faisant face à la surface (15) des cellules de batterie (12) et le long d'un deuxième côté des moyens de connexion électrique (18) opposé au premier côté.

3. Système de batterie (10) selon la revendication 1 ou 2, dans lequel l'élément d'isolation et de fixation (20) renferme l'élément de support (22) depuis au moins deux côtés opposés en s'étendant le long d'un premier côté de l'élément de support (22) faisant face à la surface (15) des cellules de batterie (12) et le long d'un deuxième côté de l'élément de support (22) opposé au premier côté.

4. Système de batterie (10) selon l'une quelconque des revendications précédentes, dans lequel l'élément d'isolation et de fixation (20) comprend une couche inférieure (20b) et une couche supérieure (20a), dans lequel les moyens de connexion électrique (18) et le au moins un élément de support de cellules (22) sont renfermés par la couche inférieure et la couche supérieure.

5. Système de batterie (10) selon la revendication 4, dans lequel une couche isolante intermédiaire abritant les moyens de connexion électrique (18) et le au moins un élément de support de cellules (22) est disposé en tant que couche médiane (20c) entre la couche supérieure et la couche inférieure.

6. Système de batterie (10) selon l'une quelconque des revendications précédentes, dans lequel l'élément d'isolation et de fixation (20) recouvre entièrement la surface des cellules de batterie (12).

7. Système de batterie (10) selon l'une quelconque des revendications précédentes, dans lequel l'élément d'isolation et de fixation (20) comprend des moyens de ventilation alignés avec des sorties de ventilation des cellules de batterie (12) et adaptés de telle sorte que des produits de ventilation sortant des cellules de batterie (12) peuvent passer à travers les moyens de ventilation dans un canal de ventilation du boîtier de batterie.

8. Système de batterie (10) selon la revendication 7, dans lequel les moyens de ventilation comprennent l'un quelconque des éléments suivants : des trous traversants s'étendant à travers l'élément d'isolation et de fixation (20), des soupapes de ventilation, des membranes d'éclatement éclatant sous la pression des produits de ventilation.

9. Système de batterie (10) selon l'une quelconque des revendications précédentes, dans lequel l'élément d'isolation et de fixation (20) comprend un matériau composite doté d'un tissu tissé et d'un matériau de soutien matriciel.

10. Système de batterie (10) selon la revendication 9, dans lequel le tissu tissé comprend des fibres de verre et/ou de basalte.

11. Véhicule électrique comprenant un système de batterie (10) selon l'une quelconque des revendications précédentes.
